# EUROPEAN PATENT SPECIFICATION

(11) **EP 4 129 506 B1**
(45) Date of publication and mention of the grant of the patent: **23.04.2025**
(21) Application number: 21775090.0
(22) Date of filing: 11.03.2021
(51) Int. Cl.: B09B 3/80, C22B 7/00, C22B 19/00, C22B 23/00, H01M 10/54, C22B 3/06, C22B 3/42, C22B 3/44, B22F 8/00, B22F 1/145, B09B 3/70, C22B 3/00, H01M 10/0525, C22C 1/04, C22B 3/08, C22B 3/10, C22B 15/00, C22B 19/30, B09B 101/16, B22F 9/08

(54) **METHOD FOR TREATING ALLOY**
VERFAHREN ZUR BEHANDLUNG EINER LEGIERUNG
PROCÉDÉ DE TRAITEMENT D'ALLIAGE

(30) Priority: 23.03.2020 JP 2020051156
(43) Date of publication of application: 08.02.2023
(73) Proprietor: SUMITOMO METAL MINING CO., LTD., Tokyo 105-8716 (JP)
(72) Inventor: KUDOU, Keiji, Niihama-shi, Ehime 792-0002 (JP); ASANO, Satoshi, Niihama-shi, Ehime 792-0002 (JP); HEGURI, Shin-ichi, Niihama-shi, Ehime 792-0002 (JP); TAKENOUCHI, Hiroshi, Niihama-shi, Ehime 792-0002 (JP); SHOUJI, Hirofumi, Niihama-shi, Ehime 792-0002 (JP); MATSUOKA, Itsumi, Niihama-shi, Ehime 792-0002 (JP); SANJO, Shota, Niihama-shi, Ehime 792-0002 (JP); MATSUGI, Takumi, Niihama-shi, Ehime 792-0002 (JP)
(74) Representative: Jones, Nicholas Andrew
(86) International application number: PCT/JP2021/009777
(87) International publication number: WO 2021/193095

(56) References cited:
- WO-A1-2019/082532
- WO-A1-2019/082533
- JP-A- 2009 185 338
- JP-A- 2009 185 338
- JP-A- 2015 183 292
- JP-A- 2015 183 292

## Description

### TECHNICAL FIELD

The present invention relates to a method for treating an alloy, for obtaining a solution including nickel and/or cobalt from an alloy including nickel and/or cobalt, copper, and zinc.

### BACKGROUND ART

Vehicles such as electric vehicles and hybrid vehicles, and electronic devices such as cellular phones, smart phones, and personal computers are equipped with a lithium ion battery (hereinafter, also referred to as "LIB") having a light weight and large output.

LIB has a structure including a negative electrode material in which a negative electrode active material such as graphite is fixed on the surface by using a copper foil as a negative electrode current collector, and a positive electrode material in which a positive electrode active material such as lithium nickelate and lithium cobaltate is fixed to a positive electrode current collector made of aluminum foil, being charged together with a separator made of a porous resin film of polypropylene, and the like, inside of an outer can made of metal such as aluminum or iron, or plastic such as vinyl chloride, being impregnated with an organic solvent including an electrolyte such as lithium hexafluorophosphate (LiPF₆) as an electrolytic solution.

When LIB is incorporated into vehicles or electronic devices mentioned above and used, the LIB eventually cannot be used due to deterioration of vehicles or electronic devices or the lifetime of the LIB, and becomes a waste lithium ion battery (waste LIB). Furthermore, the waste LIB may be generated as defective products in the production process from the beginning.

Such a waste LIB includes valuable components such as nickel, cobalt, and copper, and it is desirable to recover and reuse valuable components for effective use of resources.

Generally, in order to efficiently recover valuable components from a device, a member or a material made of metal, a pyrometallurgical treatment in which valuable components are introduced into a furnace, and the like, melted at a high temperature, and separated into metal including a valuable substance and other slag has been generally and widely carried out.

For example, Patent Document 1 discloses a method for recovering a valuable metal using a pyrometallurgical treatment. When the method of Patent Document 1 is applied to waste LIB, a copper alloy including nickel and cobalt can be obtained.

Although this pyrometallurgical treatment has a demerit that energy is required in order to heat to high temperature using a furnace, this pyrometallurgical treatment has advantage that various impurities can be separated all together. Furthermore, the slag obtained by the pyrometallurgical treatment has a chemically stable property, and there is little concern that it affects the environment, and there is an advantage that it is easy to dispose of.

However, there has been a problem that when waste LIB is treated by the pyrometallurgical treatment, a part of the valuable components, in particular, most of cobalt is distributed to slag, resulting in the inevitable recovery loss of cobalt.

Furthermore, metal obtained by the pyrometallurgical treatment is an alloy including valuable components, so that reuse of the metal requires purification by separating the metal components from the alloy and removing impurities.

Examples of a method for separating elements generally used in the dry method include a method for separating copper from lead or lead from zinc by slowly cooling from a high temperature melted state. However, when the main components are copper and nickel as in waste LIB, the copper and nickel melt uniformly in the entire composition range, and therefore, even if slowly cooled, the copper and nickel are only mixed and solidified in layers and cannot be separated.

Furthermore, there is also a purification method in which nickel is subjected to a disproportionation reaction using carbon monoxide (CO) gas and is volatilized from copper and cobalt to be separated, but it is difficult to secure safety because toxic CO gas is used.

Furthermore, examples of methods for separating copper from nickel which has been used industrially include a method for roughly separating a mixed mat (sulfide). This method generates a mat including copper and nickel in a smelting process, and the mat is slowly cooled in the same manner as described above to separate the sulfide including a large amount of copper from sulfide including a large amount of nickel.

However, also in this separating method, separation of copper and nickel is limited to rough separation, and separate treatment such as electrolytic purification is required to obtain nickel and copper with high purity.

Besides, a method of utilizing vapor pressure differences through chloride has also been studied. However, since this is a process for handling a large amount of toxic chlorine, corrosion and safety measures for the device are required on a large scale. Therefore, it cannot be said that this method is an industrially suitable method.

In this way, each element separation and purification by the dry method has disadvantages that the resulting separation remains a rough separation level or is expensive compared with the wet method.

On the other hand, hydrometallurgical treatment using a hydrometallurgy method using methods such as acid, neutralization, and solvent extraction, has the advantage that energy consumption is small and mixed valuable components can be separated individually and recovered in high purity grade.

However, when waste LIB is treated by hydrometallurgical treatment, hexafluorophosphate anion of the electrolyte components contained in waste LIB is a difficult-to-treat substance that cannot be completely decomposed even at high temperature and with sulfuric acid having high concentration, and the valuable component is mixed into the leached acid solution.

Since the hexafluorophosphate anion is water-soluble carbonate ester, it is difficult to recover phosphorus and fluorine from an aqueous solution after recovery of valuable substances, and there are many environmental restrictions such as the need to take various measures to suppress release to public sea areas.

In addition, it is not easy to obtain a solution capable of efficiently leaching valuable components from waste LIB with only acid and providing the solution for purification. The waste LIB main body itself is hardly leached with acid and the like, and it is not easy to completely leach valuable components.

Furthermore, forcibly leaching is carried out, for example, using an acid with strong oxidizing power, not only valuable components but also impurity components such as aluminum, iron, and manganese, which are not industrial subjects to be recovered, will be leached out. Therefore, the cost of neutralizing agent for treating impurities by, for example, neutralization, and there arises a problem that the amount of wastewater generated and the amount of impurities increase.

In addition, waste LIB may include residual electric charges, and if the waste LIB is attempted to be treated as it is, heat generation, explosion, and the like, may occur. Therefore, it takes time and effort to discharge the residual electric charges.

In this way, it was not always an advantageous method to treat waste LIB using only the hydrometallurgical treatment.

An attempt has been made to remove impurities as much as possible from waste LIB, which is difficult to be treated by pyrometallurgical treatment or hydrometallurgical treatment alone, by a method combining pyrometallurgical treatment and hydrometallurgical treatment, that is, by pyrometallurgical treatment such as roasting waste LIB to obtain a uniform waste LIB treated material, and to divide the treated material into valuable components and other components by hydrometallurgical treatment.

In this method that combines pyrometallurgical treatment and hydrometallurgical treatment, fluorine and phosphorus in the electrolytic solution are volatilized and removed by the pyrometallurgical treatment, and the organic members such as plastics and separators, which are the structural components of the waste LIB, are also decomposed by heat. Since the waste LIB treated product obtained by the pyrometallurgical treatment can be obtained with uniform properties, it is easy to handle as a uniform raw material even during hydrometallurgical treatment.

However, by simply combining the pyrometallurgical treatment and the hydrometallurgical treatment, the problem of recovery loss in which the cobalt included in the waste LIB described above is distributed to the slag still remains.

A method for adjusting treatment conditions in the pyrometallurgical treatment to distribute cobalt to metal instead of slag, and carrying out reducing melting so as to reduce the distribution to slag is also conceivable. However, the metal obtained by such a method becomes a poorly soluble corrosion-resistant alloy containing nickel and cobalt based on copper. Even if an attempt is made to separate and recover valuable components from this corrosion-resistant alloy, acid dissolution is difficult, and effective recovery is not possible.

When, for example, chlorine gas is used in order to leach a corrosion-resistant alloy, the obtained dissolved solution (leachate) contains copper having high concentration and nickel and cobalt having relatively low concentration. Among them, nickel and cobalt can be easily separated using a well-known method such as a solvent extraction, but, in particular, it is difficult to separate copper from nickel and cobalt easily and at low cost.

Furthermore, the above-described waste LIB may include zinc as impurities, in addition to copper, nickel, and cobalt. However, a method for separating such zinc from nickel and cobalt has not been found.

As mentioned above, it has been difficult to obtain nickel and/or cobalt efficiently by separating copper and zinc from an alloy derived from waste LIB containing various components such as zinc in addition to valuable components such as copper, nickel and cobalt.

Note here that the above-described problems similarly exist in the case of separating copper, nickel, and cobalt from a waste battery other than waste LIB, including copper, nickel, and cobalt, and similarly exist in the case of separating copper, nickel, and cobalt from an alloy including copper, nickel, and cobalt derived from other than waste battery.
Patent Document 1: Japanese Unexamined Patent Application, Publication No.2012-172169
Patent Document 2: Japanese Unexamined Patent Application, Publication No.S63-259033

Further reference is also made to the disclosure of JP 2015 183292 A

### DISCLOSURE OF THE INVENTION

### Problems to be Solved by the Invention

The present invention has an object to provide a method for treating an alloy, for obtaining nickel and/or cobalt by separating copper and zinc from an alloy including nickel and/or cobalt, copper, and zinc of waste lithium ion batteries, according to claim 1 Dependent claims refer to preferred embodiments of the invention.

### Means for Solving the Problems

The present inventors have extensively studied in order to solve the above-mentioned problems. As a result, the present inventors have found that the above-mentioned problems can be solved through a leaching step of leaching an alloy with acid in a coexistence of a sulfating agent to obtain a leachate; a reduction step of subjecting the leachate to a reduction treatment using a reducing agent; and an ion exchanging step of bringing the solution obtained in the reduction step into contact with an amino phosphoric acid-based chelate resin to allow the amino phosphoric acid-based chelate resin to adsorb zinc to obtain a solution including nickel and/or cobalt, and have completed the present invention.
(1) The present invention relates to a method for treating an alloy, for obtaining a solution including nickel and/or cobalt from an alloy including nickel and/or cobalt, copper, and zinc, the method including: a leaching step of obtaining a leachate by subjecting the alloy to leaching treatment with acid in a coexistence of a sulfating agent; a reduction step of subjecting the leachate to reduction treatment using a reducing agent; and an ion exchanging step of obtaining a solution including nickel and/or cobalt by bringing the solution obtained in the reduction step into contact with an amino phosphoric acid-based chelate resin and allowing the amino phosphoric acid-based chelate resin to adsorb zinc, wherein in the leaching step, the sulfating agent is added first to the alloy and the acid is then added.
(2) According to an embodiment of the present invention relating to a method for treating an alloy, the method including, an oxidation neutralization step of adding an oxidizing agent and adding a neutralizing agent to the solution obtained in the reduction step to obtain a solution including nickel and/or cobalt, and zinc, and subjecting the obtained solution to the ion exchanging step.
(3) According to another embodiment of the present invention relating to a method for treating an alloy, the method including, a zinc desorption step of bringing acid into contact with the amino phosphoric acid-based chelate resin after treatment in the ion exchanging step to detach zinc adsorbed to the amino phosphoric acid-based chelate resin.
(4) According to another embodiment of the present invention relating to a method for treating an alloy, in which the amino phosphoric acid-based chelate resin is used repeatedly by subjecting the amino phosphoric acid-based chelate resin recovered through the zinc desorption step to treatment in the ion exchanging step again.
(5) According to another embodiment of the present invention relating to a method for treating an alloy, in which the alloy is an alloy obtained by melting a waste battery of a lithium ion battery.

### Effects of the Invention

According to the present invention, nickel and/or cobalt can be obtained by separating copper and zinc from an alloy including nickel and/or cobalt, copper, and zinc.

### PREFERRED MODE FOR CARRYING OUT THE INVENTION

Hereinafter, a specific embodiment of the present invention (hereinafter, referred to as "the present embodiment") will be described in detail. The present invention is not limited to the following embodiments, and can be executed with appropriate modifications within the scope of the object of the present invention. Note here that in this specification, the term "X to Y" (X and Y are arbitrary numerical values) means "X or more and Y or less".

The method for treating an alloy of the present embodiment is a method for obtaining a solution including nickel and/or cobalt from an alloy including nickel and/or cobalt, copper, and zinc.

Examples of the alloy including nickel and/or cobalt, copper, and zinc as a subject to be treated include an alloy obtained by heating and melting, and reducing wastes from raw materials including wastes from deteriorated automobiles or electronic devices, scrap of a lithium ion battery generated with the lifetime of a lithium ion battery, or waste batteries, and the like, of defective products in battery manufacturing processes.

In the following, a method for treating an alloy is described taking an alloy obtained by melting a waste battery of a lithium ion battery.

Specifically, a method for treating an alloy includes: a leaching step S1 of subjecting an alloy to leaching treatment with acid in a coexistence of sulfating agent to obtain a leachate; a reduction step S2 of subjecting a leachate to a reduction treatment using a reducing agent; an oxidation neutralization step S3 of adding an oxidizing agent and adding a neutralizing agent to the solution (reduced solution) obtained in the reduction step to obtain a solution including nickel and/or cobalt; and an ion exchanging step S4 of bringing the solution (neutralized solution) obtained in the oxidation neutralization step S3 into contact with an amino phosphoric acid-based chelate resin and allowing the amino phosphoric acid-based chelate resin to adsorb zinc to obtain a solution including nickel and/or cobalt.

### [Leaching step]

In the leaching step S1, the alloy is subjected to leaching treatment with acid in a coexistence of a sulfating agent to obtain a leachate. The alloy obtained by melting a waste battery of a lithium ion battery contains various impurities that are not subjects to be recovered in addition to copper, nickel, and cobalt. In the present embodiment, by subjecting such an alloy to a leaching treatment in a state in which the acid and the sulfide agent coexist, the copper leached out of the alloy is precipitated as copper sulfide and separated. On the other hand, by subjecting the alloy to leaching treatment with acid, a leachate is obtained by leaching nickel and/or cobalt. Note here that in this leachate, copper that has not been reacted with the sulfating agent, and impurities such as iron, phosphorus, and/or zinc may remain.

An alloy obtained by melting a waste battery of a lithium ion battery to be treated is not particularly limited in shape, and examples thereof include an alloy obtained by casting the obtained alloy into a plate shape, an alloy drawn linearly and appropriately cut into a rod, a powdery material such as alloy powder obtained by applying an atomization method (hereinafter, this alloy powder is also referred to as "atomized powder" for convenience). However, when the subject to be treated is a powdery material such as atomized powder, leaching treatment can be efficiently carried out. Note here that the atomizing method is a method in which high-pressure gas or water is brought into contact with the molten metal to scatter and quench (solidify) the molten metal to obtain powder.

When the alloy is made into a powder substance, when the particle diameter of the alloy is about 300 µm or less, the leaching treatment can be carried out more effectively. On the other hand, since too fine particles make the cost high, and may cause dust generation or ignition, the particle diameter of the alloy is preferably about 10 µm or more.

In the leaching treatment, the alloy to be treated is preferably pre-washed with a dilute acid in advance. Thus, the surface of the alloy can be subjected to active treatment, and the leaching reaction can be promoted.

As the acid, hydrochloric acid, sulfuric acid, nitric acid, or the like, can be used alone or in combination. Furthermore, chloride may be contained in sulfuric acid and used as an acid. In order to achieve a so-called "battery-to-battery" which is an ideal circulation method for recycling waste LIB and reusing it as a LIB raw material, it is preferable to use an acid including sulfuric acid. When sulfuric acid is used as the acid, the leachate can be obtained in the form of sulfate, which is easily used as the positive electrode material of the lithium ion battery.

The amount of acid used is 1 equivalent or more, preferably, 1.2 equivalents or more, more preferably 1.2 equivalents or more and 11 equivalents or less, relative to the total amount of nickel and/or cobalt included in the alloy. Thus, the reaction rate can be increased by increasing the acid concentration.

The acid and the alloy may be supplied to a device in which a plurality of stages of mixing portions, such as thickeners, are connected, and the acid and the alloy may be brought into contact with each other in a stepwise manner in a countercurrent. For example, an alloy may be supplied to the mixing portion at the top of the device, an acid may be supplied to the mixing portion at the bottom of the device, and the acid and the alloy may be brought into contact with each other in a stepwise manner in a countercurrent.

Sodium hydrosulfide or elemental sulfur can be used as the sulfating agent to be added together with the acid. When the elemental sulfur is used, it is preferable that the elemental sulfur is appropriately pulverized so as to facilitate the reaction.

The amount of the sulfating agent is preferably 1 equivalent or more with respect to the amount of copper included in the alloy.

The acid and the sulfating agent may be added to the alloy at the same time, but, according to the invention, the sulfating agent is added first and the acid is then added. When the acid and the sulfating agent are added to the alloy at the same time, the reaction may proceed rapidly and bumping may occur. By adding the sulfating agent first, and then bringing the acid into contact therewith, a rapid reaction can be suppressed. When the sulfating agent is added first, and then the acid is then added, for example, an alloy and the sulfating agent are charged into a solvent such as water, and then the acid is added. Furthermore, in order to proceed a homogeneous reaction, the leachate may be bubbled with air or the like.

It is preferable to carry out a preliminary test in advance to determine an appropriate range for temperature, time, and the concentration of slurry obtained by adding an acid and a sulfating agent to the alloy, in the leaching step S1.

In particular, in the leaching step S1, it is preferable to monitor and control the range of the oxidation-reduction potential (ORP) and pH while the oxidation-reduction potential (ORP) and pH of the leachate are measured. Specifically, the oxidation-reduction potential (ORP) is preferably controlled to 240 mV or more and 280 mV or less on the basis of the silver/silver chloride electrode, and the pH is preferably controlled to 0.8 or more and 1.6 or less. Within such a range, leaching is promoted and re-dissolution due to excessive oxidation of the precipitated copper sulfide can be suppressed.

The end point of the leaching reaction can be determined by measuring the oxidation-reduction potential (ORP) of the leachate, and determining the end portion of leaching of nickel and/or cobalt.

Note here that in the leaching treatment, a divalent copper ion may be added. Thus, the divalent copper ion acts as a catalyst, and the leaching reaction can be promoted.

### [Reduction step]

In the reduction step S2, the leachate obtained in the leaching step S1 is subjected to reduction treatment using a reducing agent. Herein, in the treatment in the leaching step S1 described above, copper constituting the alloy, together with nickel and/or cobalt, is leached by acid and dissolved in the solution, and a part of the copper remains in the solution without reacting with the sulfating agent. Then, in the reduction step S2, a small amount of copper remaining in the leachate is reduced to produce a precipitate including copper, and the produced precipitate is separated by solid-liquid separation to obtain a solution (reduced solution) including nickel and/or cobalt.

As the reducing agent, for example, a less noble metal than copper can be used. Among them, preferably, metal including nickel and/or cobalt is used, and copper is reduced by bringing the leachate into contact with the metal. The treatment method of the alloy treatment method according to the present embodiment obtains a solution including nickel and/or cobalt, and is industrially advantageous because by using a metal including nickel and/or cobalt to be recovered as a reducing agent, there is no need to recover the reducing agent separately in a subsequent step.

Note here that as the reducing agent, in addition to the metal mentioned above, sulfide can be used. Sulfide may be solid, liquid or gas (gaseous form). Sulfide may also be a mixture of the powdery substance of the alloy to be treated in the leaching step S1 described above and sulfur. In addition, it is preferable to use atomized powder obtained by quenching and pulverizing the molten metal of the alloy into powder.

The method for reducing the leachate is not particularly limited, and when a solid or liquid reducing agent is used, the reducing agent may be directly added to the leachate, and when the reducing agent is gas (gaseous form), the reducing agent may be added by bubbling to the leachate.

It is preferable that the addition amount of the reducing agent and the reaction temperature be tested in advance to select the optimum range. Furthermore, the reduction treatment is preferably controlled by monitoring the oxidation-reduction potential (ORP) and pH and adding a reducing agent or the like as appropriate to control them, and it is preferable to select the optimum range by carrying out a test in advance.

### [Oxidation neutralization step]

In the oxidation neutralization step S3, oxidation neutralization treatment is carried out by adding an oxidizing agent and adding the neutralizing agent to the solution (reduced solution) obtained in the reduction step S2 to obtain a solution (neutralized solution) including nickel and/or cobalt, and zinc. Specifically, in the oxidation-neutralization step S3, an oxidizing agent is added to the reduced solution to cause an oxidation reaction, and when a neutralizing agent is added to control the pH of the solution to a predetermined range, at least a precipitate of iron and/or phosphorus included in the reduced solution is produced. Although it is not essential to provide the oxidation neutralization step S3 in the present invention, at least iron and/or phosphorus can be separated as a precipitate through the oxidation neutralization step S3 to obtain a purified solution (neutralized solution) including nickel and/or cobalt and zinc.

The oxidizing agent is not particularly limited, and conventionally known oxidizing agents such as hydrogen peroxide and hypochlorous acid can be used.

Addition of the oxidizing agent is preferably controlled within a predetermined range by monitoring the oxidation-reduction potential (ORP) of the solution. Specifically, an oxidizing agent is added to the solution to control the ORP (using silver/silver chloride as a reference electrode) in a range of, for example, 380 mV to 430 mV.

Furthermore, an oxidizing agent is added so as to cause an oxidation reaction, and a neutralizing agent is added so as to control the pH of the solution, preferably, in a range of 3.8 or more and 4.5 or less. When neutralization treatment is carried out by controlling the pH in such a range, impurities such as at least iron and/or phosphorus can be effectively precipitated.

The neutralizing agent is not particularly limited, but conventionally known alkalis such as sodium hydroxide and potassium hydroxide can be used.

Herein, in the oxidation neutralization treatment, the oxidizing agent may be added to the reduced solution after addition of the neutralizing agent, but it is preferable that the oxidizing agent and the neutralizing agent are added to the reduced solution at the same time or the neutralizing agent is added after addition of the oxidizing agent, and it is more preferable that the neutralizing agent is added to the reduced solution after addition of the oxidizing agent. For example, when an oxidizing agent is added to the reduced solution having a high pH by the addition of the neutralizing agent, in a case where iron is included in impurities, the iron is not sufficiently oxidized, Fe(OH)₃ precipitate (iron sediment) is not sufficiently generated, and separation of the impurities may become insufficient.

### [Ion exchanging step]

In the ion exchanging step S4, the obtained solution is brought into contact with an amino phosphoric acid-based chelate resin to allow the amino phosphoric acid-based chelate resin to adsorb zinc so as to obtain a solution including nickel and/or cobalt. Specifically, the obtained solution is used as a target solution for ion exchange treatment, and zinc included in the solution is separated and removed by a method of ion exchange treatment using an amino phosphoric acid-based chelate resin to obtain a solution containing nickel and/or cobalt. The ion exchanging step S4 may be a liquid passing treatment using a column or may be a batch treatment using a beaker or the like.

The amino phosphoric acid-based chelate resin is a chelate resin having an amino phosphoric acid as a functional group. Examples of the amino phosphoric acid-based chelate resin include "Duolite C747" (trade name) manufactured by Sumitomo Chemical Co., Ltd.

Note here that after the ion exchanging step S4, a zinc desorption step of bringing the amino phosphoric acid-based chelate resin after the treatment in the ion exchanging step S4 into contact with about 1 N acid, detaching zinc adsorbed to the amino phosphoric acid-based chelate resin may be provided. Examples of acid to be used in the treatment in the zinc desorption step include conventionally known acids such as hydrochloric acid and sulfuric acid. Furthermore, the amino phosphoric acid-based chelate resin recovered through the zinc desorption step is subjected to the treatment in the ion-exchanging step again, the amino phosphoric acid-based chelate resin can be used repeatedly.

### EXAMPLES

The present invention will be described in further detail below with reference to Examples, but the present invention is not limited to the Examples below at all.

### (Example 1)

### [Leaching step]

A waste lithium ion battery (waste LIB) was subjected to pyrometallurgical treatment of carrying out reduction by heating and melting, and an alloy obtained by reducing and melting was poured into a small crucible having a hole in the bottom surface, and the molten metal flowing out of the hole was sprayed with high-pressure gas or water, and the molten metal was scattered and solidified to obtain a powdery material (atomized powder) having a particle diameter of 300 µm or less. The resultant powdery material was used as an alloy to be treated. The composition is shown in Table 1.

**[Table 1]**

| | Ni | Co | Cu | Fe | P |
|---|---|---|---|---|---|
| Alloy grade (mass%) | 40 | 20 | 38 | 1.4 | 0.5 |

The powdery material having the composition shown in Table 1 was leached with sulfuric acid and sulfur at a slurry concentration of 200 g/L. The temperature was 70°C and the leaching time was 6 hours. After leaching, solid-liquid separation was carried out by filtration, and the filtrate (leachate) was analyzed by an ICP analyzer, and the concentration of each element was obtained (in Table 2, referred to as "leachate").

### [Reduction step]

Next, a nickel powder (reducing agent) having a particle diameter of 1 µm to 300 µm was added to the resulting leachate, and the leachate was subjected to reduction treatment using a reducing agent, filtered, and solid-liquid separated, and the resulting filtrate (reduced solution) was analyzed by an ICP analyzer to determine the concentrations of the elemental components (In Table 2, referred to as "leachate").

### [Oxidation neutralization step]

Next, while the obtained reduced solution was maintained at liquid temperature of 60°C to 70°C, a hydrogen peroxide solution (oxidizing agent) having a concentration of 30% was added. After the hydrogen peroxide solution (oxidizing agent) was added, a sodium hydroxide solution (neutralizing agent) was added. Thus, the reduced solution was subjected to an oxidation neutralization reaction. The oxidation-reduction potential (ORP) at this time was in the range of 380 mV to 430 mV with a silver-silver chloride electrode used as the reference electrode, and the pH was in the range of 3.8 or more and 4.5 or less. After the reaction, solid-liquid separation by filtration, a filtrate (neutralized solution) was analyzed by an ICP analyzer, the concentration of each element component was obtained (in Table 2, referred to as "neutralized solution").

**[Table 2]**

| (g/L) | Ni | Co | Cu | Fe | P |
|---|---|---|---|---|---|
| Leachate | 76 | 38 | 5 | 2.8 | 1 |
| Reduced solution | 80 | 38 | 0.001 | 2.8 | 1 |
| Neutralized solution | 80 | 38 | 0.001 | 0.001 | 0.001 |

From Table 1, 38 mass% copper was included in an alloy before the leaching step, but from Table 2, the concentration of copper in the leachate after the leaching step was 5 g/L, and was relatively lower as compared with the concentration of nickel or cobalt. This is considered because most of copper in the alloy (powder) was precipitated as copper sulfide and separated through the leaching step.

On the other hand, from Table 2, it is found that while the concentration of copper in the leachate was 5 g/L, the concentration of copper in the reduced solution was lower as 0.001 g/L. This is considered because a small amount of copper remaining in the leachate was reduced through the reduction step and separated as a sediment.

Furthermore, from Table 2, it is found that while the concentration of iron in the reduced solution is 2.8 g/L and the concentration of phosphorus in the reduced solution is 1 g/L, the concentration of iron in the neutralized solution is 0.001 g/L and the concentration of phosphorus in the reduced solution is low as 0.001 g/L. This is considered because iron or phosphorus was separated as a sediment through the oxidation neutralization step.

### (Example 2)

The other waste lithium ion battery (waste LIB) being different from that of the above Example 1 was prepared, and similarly, a neutralized solution (starting solution) was obtained through a leaching step, a reduction step, and an oxidation neutralization step. This neutralized solution (starting solution) was analyzed by an ICP analyzer to obtain the concentration (g/L). The concentration (g/L) of each element component was shown in Tables 3 and 5 (in Tables, referred to as "neutralized solution (starting solution)").

### [Ion exchanging step]

An amino phosphoric acid-based chelate resin (Duolite C747): 20 ml, and a neutralized solution 100 ml obtained in the oxidation neutralization step were placed in a glass beaker and stirred with a stirrer for 30 minutes to bring the neutralized solution into contact with the amino phosphoric acid-based chelate resin to perform ion exchange treatment. After stirring, the amino phosphoric acid-based chelate resin and a solution (final solution) were separated, and the solution (final solution) was analyzed by the ICP analyzer to determine the concentration (g/L) of each element component. The concentrations of elements are shown in Table 3 (referred to as "final solution" in the table).

**[Table 3]**

| Example2 | Ni | Co | Mn | Zn |
|---|---|---|---|---|
| | (g/L) | (g/L) | (g/L) | (g/L) |
| Neutralized solution (Starting solution) | 29.0 | 29.6 | 0.14 | 0.05 |
| Final solution | 25.7 | 24.6 | 0.070 | 0.004 |

On the other hand, the amino phosphoric acid-based chelate resin after the ion exchange treatment was brought into contact with white fume sulfuric acid, and each element component adsorbed to the amino phosphoric acid-based chelate resin was analyzed by the ICP analyzer to obtain an analytical value, and the adsorption rate (%) of the chelate resin was obtained from the analytical value. Table 4 shows the adsorption rate (%) of each element component.

**[Table 4]**

| Example 2 | Ni | Co | Mn | Zn |
|---|---|---|---|---|
| | (% ) | (%) | (%) | (%) |
| Adsorption rate | 11.5 | 16.9 | 49.8 | 92.6 |

### (Example3~5)

In Example 2, an amino phosphoric acid-based chelate resin different from Duolite C747 was used, and similarly, the neutralized solution obtained in the oxidation neutralization step was subjected to ion exchange treatment, and similarly, the concentration (g/L) of each element component in the final solution and the adsorption rate (%) of chelate resin were obtained. The concentration (g/L) of each element component is shown in Table 5, and the adsorption rates (%) of chelate resins are shown in Table 6.

**[Table 5]**

| Concentration of each element component | | | Ni | Co | Mn | Zn |
|---|---|---|---|---|---|---|
| | | | (g/L) | (g/L) | (g/L) | (g/L) |
| Neutralized solution (Starting solution) | | | 29.0 | 29.6 | 0.14 | 0.052 |
| Final solution | Example 3 | R S950 manufactured by Purolite | 26.1 | 26.1 | 0.10 | 0.036 |
| | Example 4 | Sumichelate MC950 manufactured by Sumika Chemtex Company, Limited | 25.6 | 24.7 | 0.074 | 0.007 |
| | Example 5 | UR-3300 manufactured by UNITIKA LTD. | 27.8 | 29.1 | 0.12 | 0.035 |

**[Table 6]**

| Adsorption rate | | | Ni | Co | Mn | Zn |
|---|---|---|---|---|---|---|
| | | | (%) | (%) | (%) | (%) |
| Final solution | Example 3 | R S950 manufactured by Purolite | 10.1 | 11.9 | 27.0 | 30.2 |
| | Example 4 | Sumichelate MC950 manufactured by Sumika Chemtex Company, Limited | 11.7 | 16.7 | 46.6 | 87.3 |
| | Example 5 | UR-3300 manufactured by UNITIKA LTD. | 4.11 | 1.58 | 16.4 | 33.6 |

As is apparent from Tables 3 to 6, it is shown that in Examples 2 to 5 in which the neutralized solution was brought into contact with the amino phosphoric acid-based chelate resin, zinc is adsorbed and zinc is separated to obtain nickel and/or cobalt.

Among them, in Example 2 in which Duolite C747 was used as the amino phosphoric acid-based chelate resin, it is shown that the adsorption rate of zinc was highest, and from an alloy including copper and zinc, zinc is separated more efficiently to obtain nickel and/or cobalt.

### (Comparative Example)

In Example 2, a chelate resin different from the amino phosphoric acid-based chelate resin (Diaion CR 11 type which is an iminodiacetic acid-based chelate resin manufactured by Mitsubishi Chemical Corporation) was used to similarly perform ion exchange treatment on the neutralized solution obtained in the oxidation neutralization step (Comparative Example). However, with the iminodiacetic acid-based chelate resin, the adsorption of zinc was not observed (adsorption rate: 0.0%), and the objective of the present invention to obtain nickel and/or cobalt by separating zinc was not able to be achieved.

## Claims

1. A method for treating an alloy, for obtaining a solution comprising nickel and/or cobalt from an alloy comprising nickel and/or cobalt, copper, and zinc, the method comprising:
a leaching step of obtaining a leachate by subjecting the alloy to leaching treatment with acid in a coexistence of a sulfating agent;
a reduction step of subjecting the leachate to reduction treatment using a reducing agent; and
an ion exchanging step of obtaining a solution including nickel and/or cobalt by bringing the solution obtained in the reduction step into contact with an amino phosphoric acid-based chelate resin and allowing the amino phosphoric acid-based chelate resin to adsorb zinc,
wherein in the leaching step, the sulfating agent is added first to the alloy and the acid is then added.

2. The method for treating an alloy according to claim 1, comprising an oxidation neutralization step of adding an oxidizing agent and adding a neutralizing agent to the solution obtained in the reduction step to obtain a solution including nickel and/or cobalt, and zinc, and subjecting the obtained solution to the ion exchanging step.

3. The method for treating an alloy according to claim 1 or claim 2, the method comprising a zinc desorption step of bringing acid into contact with the amino phosphoric acid-based chelate resin after treatment in the ion-exchanging step to detach zinc adsorbed to the amino phosphoric acid-based chelate resin.

4. The method for treating an alloy according to claim 3, wherein the amino phosphoric acid-based chelate resin is used repeatedly by subjecting the amino phosphoric acid-based chelate resin recovered through the zinc desorption step to treatment in the ion exchanging step again.

5. The method for treating an alloy according to any one of claim 1 to 4, wherein the alloy is an alloy obtained by melting a waste battery of a lithium ion battery.

## Patentansprüche

1. Verfahren zur Behandlung einer Legierung, um aus einer Nickel und/oder Kobalt, Kupfer und Zink enthaltenden Legierung eine Nickel und/oder Kobalt enthaltende Lösung zu erhalten, das Verfahren umfassend:
einen Auslaugschritt zum Erhalten einer Laugelösung durch Unterziehen der Legierung einer Auslaugbehandlung mit Säure bei gleichzeitiger Anwesenheit eines Sulfatierungsmittels,
einen Reduktionsschritt zum Unterziehen der Laugelösung einer Reduktionsbehandlung unter Verwendung eines Reduktionsmittels und
einen Ionenaustauschschritt zum Erhalten einer Nickel und/oder Kobalt enthaltenden Lösung durch In-Kontakt-Bringen der im Reduktionsschritt erhaltenen Lösung mit einem Chelatharz auf Aminophosphorsäurebasis und Adsorption von Zink durch das Chelatharz auf Aminophosphorsäurebasis,
wobei im Auslaugschritt zuerst das Sulfatierungsmittel und dann die Säure zu der Legierung gegeben wird.

2. Verfahren zur Behandlung einer Legierung nach Anspruch 1, umfassend einen Oxidationsneutralisierungsschritt, bei dem ein Oxidationsmittel und ein Neutralisierungsmittel zu der im Reduktionsschritt erhaltenen Lösung hinzugefügt werden, um eine Lösung zu erhalten, die Nickel und/oder Kobalt und Zink enthält, und die erhaltene Lösung dem Ionenaustauschschritt unterzogen wird.

3. Verfahren zur Behandlung einer Legierung nach Anspruch 1 oder Anspruch 2, umfassend einen Zinkdesorptionsschritt, bei dem Säure mit dem Chelatharz auf Aminophosphorsäurebasis nach der Behandlung im Ionenaustauschschritt in Kontakt gebracht wird, um an dem Chelatharz auf Aminophosphorsäurebasis adsorbiertes Zink abzulösen.

4. Verfahren zur Behandlung einer Legierung nach Anspruch 3, wobei das Chelatharz auf Aminophosphorsäurebasis wiederholt verwendet wird, indem das durch den Zinkdesorptionsschritt zurückgewonnene Chelatharz auf Aminophosphorsäurebasis erneut einer Behandlung im Ionenaustauschschritt unterzogen wird.

5. Verfahren zum Behandeln einer Legierung nach einem der Ansprüche 1 bis 4, wobei die Legierung eine Legierung ist, die durch Schmelzen einer Altbatterie einer Lithium-Ionen-Batterie gewonnen wird.

## Revendications

1. Procédé de traitement d'un alliage, pour obtenir une solution comprenant du nickel et/ou du cobalt à partir d'un alliage comprenant du nickel et/ou du cobalt, du cuivre et du zinc, le procédé comprenant :
une étape de lixiviation consistant à obtenir un lixiviat en soumettant l'alliage à un traitement de lixiviation avec un acide avec l'existence conjointe d'un agent de sulfatation ;
une étape de réduction consistant à soumettre le lixiviat à un traitement de réduction en utilisant un agent réducteur ; et
une étape d'échange d'ions consistant à obtenir une solution comprenant du nickel et/ou du cobalt en mettant la solution obtenue dans l'étape de réduction en contact avec une résine de chélate à base d'acide aminophosphorique et en permettant à la résine de chélate à base d'acide aminophosphorique d'adsorber le zinc,
dans lequel dans l'étape de lixiviation, l'agent de sulfatation est ajouté en premier à l'alliage et l'acide est ensuite ajouté.

2. Procédé de traitement d'un alliage selon la revendication 1, comprenant une étape de neutralisation par oxydation consistant à ajouter un agent oxydant et à ajouter un agent neutralisant à la solution obtenue dans l'étape de réduction pour obtenir une solution comprenant du nickel et/ou du cobalt, et du zinc, et à soumettre la solution obtenue à l'étape d'échange d'ions.

3. Procédé de traitement d'un alliage selon la revendication 1 ou la revendication 2, le procédé comprenant une étape de désorption de zinc consistant à mettre un acide en contact avec la résine de chélate à base d'acide aminophosphorique après un traitement dans l'étape d'échange d'ions pour détacher le zinc adsorbé sur la résine de chélate à base d'acide aminophosphorique.

4. Procédé de traitement d'un alliage selon la revendication 3, dans lequel la résine de chélate à base d'acide aminophosphorique est utilisée de manière répétée en soumettant la résine de chélate à base d'acide aminophosphorique récupérée via l'étape de désorption de zinc à nouveau à un traitement dans l'étape d'échange d'ions.

5. Procédé de traitement d'un alliage selon l'une quelconque des revendications 1 à 4, dans lequel l'alliage est un alliage obtenu en faisant fondre une batterie usagée constituée d'une batterie lithium-ion.
